# EUROPEAN PATENT SPECIFICATION

(11) **EP 0 259 188 B1**
(45) Date of publication and mention of the grant of the patent: **30.11.1994**
(21) Application number: 87307855.4
(22) Date of filing: 04.09.1987
(51) Int. Cl.: C08G 75/02, C08L 81/02

(54) **Process for preparing a polyarylene thioether having a high crystallization rate.**
Verfahren zur Herstellung eines Polyarylenthioäthers mit hoher Kristallinsationsgeschwindigkeit.
Procédé de préparation de poly[thioéther d'árylene] ayant une vitesse élevée de cristallisation.

(30) Priority: 05.09.1986 JP 208900/86
(43) Date of publication of application: 09.03.1988
(73) Proprietor: KUREHA KAGAKU KOGYO KABUSHIKI KAISHA, Tokyo 103 (JP)
(72) Inventor: Ichikawa, Yukio, Iwaki-shi Fukushima-ken (JP); Katto, Takayuki, Iwaki-shi Fukushima-ken (JP); Shiiki, Zenya, Iwaki-shi Fukushima-ken (JP)
(74) Representative: Woods, Geoffrey Corlett

(56) References cited:
- EP-A- 0 087 038
- EP-A- 0 166 451
- EP-A- 0 193 951
- EP-A- 0 216 116

## Description

The present invention concerns a process for manufacturing a polyarylene thioether (hereinafter referred to as PATE).

PATE has been developed as a heat resistant, chemical resistant and flame resistant thermoplastic resin. Particularly, since PATE crystallizes easily, it has advantageous features in that it has excellent melt processability such as for injection molding and in that the resultant molded products have excellent physical properties such as dimensional stability, strength, hardness and insulating performance. Taking these advantages, PATE has been employed in the industrial fields of electric, electronics, automobiles, aircrafts, precision instruments and chemicals.

However, since the crystallizing rate of PATE from the molten state is still not sufficiently high upon conducting melt processing, particularly injection molding, a relatively long period of time is necessary till the molten product in the mold is solidified sufficiently. As a result, there has been a problem that the molding cycle can not be accelerated.

The present inventors have made an extensive study on a method of shortening the time required for a molten polymer to crystallize from the molten state and, as a result, have found that a PATE crystallizable at a high rate can be obtained by treating a PATE of an adequate molecular weight or an adequate inherent solution viscosity ηᵢₙₕ with a solution of a strong-acid-weak-base type salt.

The present invention has been attained based on the above finding.

The object of the present invention is to provide a process for manufacturing a PATE of high crystallizing rate capable of being melt processed in a rapid molding cycle, particularly injection molding, by shortening the time till a molten product is sufficiently solidified in the mold.

The PATE produced has a high crystallizing rate, and the time necessary for 50% crystallization is not more than 50 seconds from the molten polymer at 250°C.

The invention provides a process for producing a polyarylene thioether, which process comprises treating a polyarylene thioether comprising not less than 60 mol % of a repeating unit of 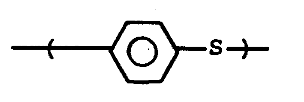
and having an inherent solution viscosity (measured with a 1-chloronaphthalene solution of 0.4 g of polymer/dl at 206°C) of not less than 0.05 and not more than 0.25 dl/g, at a temperature of 0 to 150°C and for a time of 5 to 500 minutes whereby curing is prevented, with a solution containing from 0.1 to 30% by weight of a salt composed of a non-oxidative strong acid with an ionization constant K of not less than 10⁻³ and a weak base with an ionization constant K of not more than 10⁻⁴, both measured in an aqueous solution at 25°C.

The polyarylene thioether used in the above process is suitably prepared by bringing an alkali metal sulfide and a halo aromatic compound comprising a p-dihalo benzene as the main ingredient into a dehalogenating-sulfurizing reaction in an aprotic organic solvent.

In general, a polymer having a short 50% crystallization time from the molten polymer after the start of crystallization at a temperature lower than its melting point, in other words, a polymer exhibiting a sharp peak in its heat radiation curve of crystallization, has a high crystallizing rate, and accordingly requires a short time for the molten product to solidify in a mold during extrusion molding or the like, and, as a result, the molding cycle can be accelerated easily.

Accordingly, by using PATE having a short 50% crystallization time produced according to the present invention, it is possible to remarkably improve productivity and also significantly reduce production costs for molded products in, for example, injection molding.

Since the 50% crystallization time of conventional PATES is 100 seconds or longer (as will be detailed later) and, more broadly speaking, from several hundreds to several thousands of seconds, the crystallizing rate achieved in the present invention can be regarded as extraordinarily high.

### PATE of High Crystallizing Rate

### Original PATE:

Generally, PATE means a polymer comprising a repeating unit of (̵ Ar-S )̵ (Ar: arylene group) as a constituent. The PATE produced in the present invention comprises the repeating unit of 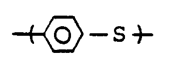
in an amount of not less than 60 mol%, preferably not less than 75 mol% of the total repeating unit of (̵Ar-S)̵.

It is preferred that p-phenylene is the arylene group for PATE of a a high crystallizing rate. Such a PATE is also preferred in view of physical properties such as heat resistance, moldability and mechanical properties.

Arylene groups other than p-phenylene as the main constituent usable herein include, for example, m-phenylene 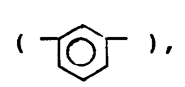
o-phenylene 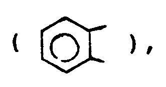
alkyl-substituted phenylene 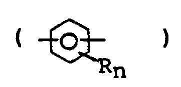
in which R represents alkyl (preferably lower alkyl) and n is an integer of 1 to 4, p,p'-diphenylenesulfone 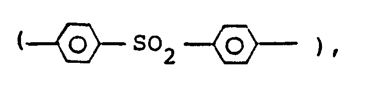
p,p'-biphenylene 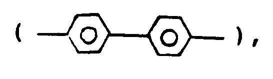
p,p'-diphenylene ether 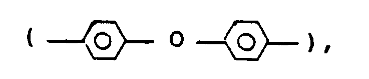
p,p'-diphenylene carbonyl 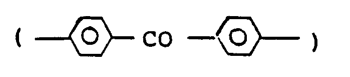
and naphthalene

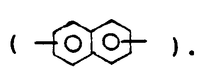

From the viewpoint of processability, those copolymers containing different types of repeating units are generally better than those homopolymers containing only the repeating unit of 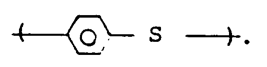
As the copolymer, those comprising 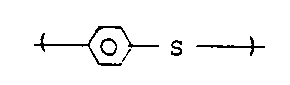
and 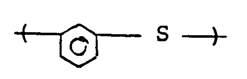
are preferred and, particularly, those containing the respective repeating units in block form are more preferable to those containing such units in random form (refer to EP-A 166,451). The block copolymer is excellent over use of the random copolymer and has better physical properties (e.g. heat resistance and mechanical properties) than the random copolymer, although they are substantially equal with respect to processability. 5 to 40 mol% of the repeating unit of 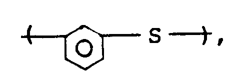
in the block copolymer (i.e., 95 to 60 mol% of the repeating unit of 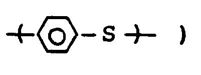
is preferable and 10 to 25 mol% is more preferable.

As the PATE according to the present invention, those of substantially linear structure are preferred having regard to crystallization properties and physical properties. However, a crosslinked product obtained by using a small amount of a crosslinking agent (for example, 1,2,4-trichlorobenzene) upon polymerization, within a range not imparing the crystallization properties and physical properties, may also be used. Uncured PATE is preferred as the original polymer for the present invention. Judging from the fact that (a) by using cured PATE it is difficult to form a PATE having a 50% crystallization time of not more than 50 seconds, and (b) cured PATE contains many branched and cross-linked structures, producing a molded product which is insufficient in mechanical strength, severely discoloured and is unstable upon melt processing, cured PATE is not preferable in respect to physical properties and processability.

As the starting PATE of the present invention, a PATE having a melting point higher than 250°C is preferred. If the melting point is lower than 250°C, the heat resistance of the polymer is impaired.

In the case of producing a PATE of high crystallizing rate by processing such a starting PATE, the molecular weight of the starting PATE is an important factor (as will be explained later in detail).

The PATE preferably used in the present invention as described above can be produced generally by subjecting an alkali metal sulfide (for example, sodium sulfide) and a halo aromatic compound containing p-dihalo benzene as the main ingredient to a dehalogenating-sulfurizing reaction in an aprotic organic polar solvent (for example, N-methyl pyrrolidone). Practically, it can be produced with an economical advantage, for example, by the method described in US-A-4,645,826 filed by the present inventors. In addition, a method described in US-A-3,919,177 in which a polymerization aid such as a carboxylic acid salt is added in a large amount to obtain a high molecular weight PATE can be used. However, the latter method is disadvantageous from an economic point of view.

### Crystallization Property:

The PATE produced according to the process of the present invention has a 50% crystallization time from the molten polymer at 250°C of as little as not more than 50 seconds, and particularly not more than 40 seconds. As has been described above "50% crystallization time" means the time required for the crystallized proportion of a molten polymer to reach 50%. Since the time for 50% crystallization of conventional PATEs is from several hundreds to several thousands of seconds, the crystallizing rate of the PATE produced according to the present invention is outstandingly high and, accordingly, the molding cycle can significantly be improved by the PATE produced by present invention.

### Production of PATE of High Crystallizing Rate:

Production of PATE of high crystallizing rate according to the present invention involves selecting a PATE having an adequate molecular weight among the PATEs with the structure appropriate to the present invention and processing it in a solution of a strong-acid-weak-base type salt.

### Molecular Weight of Original PATE:

Since the molecular weight of a PATE gives a significant effect on its 50% crystallization time, this is an extremely important factor.

The range of the molecular weight of PATE with high crystallizing rate, when expressed as an inherent solution viscosity ηᵢₙₕ (measured at 206°C with a 1-chloronaphthalene solution of PATE at 0.4 g/dl in concentration), is not less than 0.05 and not more than 0.25 dl/g, preferably 0.10 to 0.20 dl/g.

If the ηᵢₙₕ is in excess of 0.25 dl/g, it is difficult to form a PATE having a 50% crystallization time of not more than 50 seconds. While on the other hand, a ηᵢₙₕ of less than 0.05 dl/g is not preferred from the viewpoint of fabrication and physical properties because, for example, melt processing is difficult due to the low melt viscosity and the mechanical properties of resultant molded products are poor.

### Treatment with Strong Acid/Weak Base Solution:

The process of the invention to obtain PATE with a 50% crystallization time of not more than 50 seconds suitably comprises (1) forming a PATE having the properties as described above through a polymerization reaction in a solvent, (2) separating the PATE formed from the reaction mixture and (3) treating the PATE with a solution of a non-oxidative strong-acid-weak-base type salt. The polyarylene thioether (PATE) is suitably formed through a dehalogenating-sulfurizing reaction between an alkali metal sulfide and a dihalo aromatic compound in an aprotic organic polar solvent and the solid polymer separated from the polymerization reaction mixture is treated as above. The solid polymer may be a wet or dried solid polymer separated from the liquid mixture by means of, for example, filtration or sieving, or it may be a wet or dried polymer obtained after washing with, for example, methanol or water. When the particle size is large, the polymer is preferably pulverized in, for example, a mill before the treatment.

A treatment in a solution of a strong-acid-weak-base type salt is applied to such polymer. The polymer content in the solution of the treating agent is preferably 2 to 70% by weight.

### Treatment with Strong-Acid Weak-Base Type Salt

As the strong acid in the strong-acid weak-base type salt, a non-oxidative acid with an ionisation constant K of not less than 10⁻³, measured in an aqueous solution at 25°C, is used. Examples of suitable acids are hydrochloric acid, dilute sulfuric acid, maleic acid, phosphoric acid, formic acid and halogenated acetic acid. As the weak base, one having an ionization constant K, measured in an aqueous solution at 25°C, of not more than 10⁻⁴ is used. Ammonia and pyridine are preferred. Among the possible combinations, NH₄Cl, (NH₄)₂SO₄ and (NH₄)₃PO₄ are preferred due to their excellent effect.

As the solvent for the salt, water or a mixture of water and alcohol, ketone or ether, mainly composed of water, is suitably used. It is preferable that any alcohol, ketone or ether used has sufficient miscibility with water and is a sufficiently good solvent for the salt to form an aqueous solution as a solvent. The solubility of these organic solvents and the solubility of the salts therein are well-known from, for example, handbooks. Water and/or alcohol (particularly a lower alcohol) is particularly preferable in view of the high solubility of the salt therein.

The concentration of the salt in the solution for treatment is 0.1 to 30% by weight, preferably 0.2 to 20% by weight. The effect is insufficient if the concentration is less than 0.1% by weight, whereas no substantial increase of effect can be obtained when it exceeds 30% by weight and so is uneconomical.

The temperature for the treatment is 0 to 150°C, preferably 20 to 100°C and, particularly preferably, 20 to 80°C. The time for the treatment is preferably 5 to 500 minutes and 10 to 300 minutes is particularly preferable. A temperature lower than 0°C is not preferable since penetration of the salt solution into the core of the solid polymer (usually granular or powdery) is difficult. While on the other hand, a temperature higher than 150°C is not preferable because the polymer would probably be cured. The reaction is insufficient if the time is shorter than 5 minutes, whereas no substantial increase of the efficiency can be obtained if it exceeds 500 minutes and is uneconomical.

After treating with the salt solution, the treated polymer can be cleaned by simple water washing and be sufficiently stable. A treatment device made of a conventional corrosion resistant material (e.g. stainless steel) can be used and, accordingly, the use of the salt is overwhelmingly advantageous over the use of a corrosive acid and preferable from the viewpoint of production procedures and from the economic viewpoint.

### Composition:

The PATE with high crystallizing rate produced according to the process of the present invention can be used as it is in melt processing methods, but it can be formulated into a composition with one or more components selected from (i) fibrous fillers such as glass fibers, carbonaceous fibers, silica fibers, alumina fibers, silicon carbide fibers, zirconia fibers, calcium titanate fibers, wollastonite, calcium sulfate fibers and aramide fibers, (ii) inorganic powdery fillers such as talc, mica, clay, kaolin, calcium carbonate, magnesium carbonate, calcium silicate, magnesium silicate, silica, alumina, titanium white, carbon black, calcium sulfate, iron oxide, zinc oxide and copper oxide, (iii) synthetic resins such as polyolefin, polyester, polyamide, polyimide, polyether imide, polycarbonate, polyphenylene ether, polysulfone, polyether sulfone, polyether ether ketone, polyether ketone, polyarylene, polyacetal, polyvinylidene fluoride, polyethylene tetrafluoride, polystyrene, ABS resin, epoxy resin, urethane resin, silicone resin and phenol resin, or (iv) elastomers such as polyolefin rubber, fluorine rubber, silicone rubber, hydrogenated SBR, butyl rubber, polyester rubber and polyamide rubber.

However, to take advantage of the high crystallizing rate of the PATE produced according to the present invention, it is preferred that the PATE is contained in the composition in an amount of not less than 20% by weight, more preferably not less than 30% by weight and, particularly preferably, not less than 50% by weight.

Since the PATE of high crystallizing rate produced according to the present invention or the composition thereof has a remarkably high crystallizing rate upon melt molding, it is particularly suitable for, for example, injection molding. Accordingly, the PATE or the composition thereof is particularly suitable for use in, for example, packaging materials (for use in, for example ICs, capacitors or transistors) and precise components. The invention includes a process comprising melt processing a PATE or a PATE composition produced in accordance with the invention so as to produce a molded product.

Furthermore, the PATE can be added in an amount of not less than 5% by weight, as a sort of crystallization accelerator to conventional PATEs of usual crystallizing rate. Thus, the invention includes a process comprising mixing not less than 5 wt% of a PATE produced in accordance with the invention with a PATE having a 50 % crystallisation time of 100 seconds or longer.

### EXPERIMENTAL EXAMPLE

### Synthetic Experimental Example 1:

Into a titanium-lined autoclave, 372 kg of hydrous sodium sulfide (solid content, 46.10%) and 1020 kg of N-methyl-pyrrolidone (NMP) were charged and the temperature was increased to about 203°C to distill out 144 kg of water. Then, 4 kg of water and 50 kg of NMP were supplied additionally (total water/NPM = 3.0 mol/kg). Then, 353 kg of p-dichlorobenzene was charged (total arylene group/NMP = 2.25 mol/kg) into the autoclave.

After reacting at 210°C for 6 hours and at 220°C for 2 hours, 77 kg of water was supplied additionally (total water/NMP = 7.0 mol/kg). Then, they were polymerized at 258°C for 1.5 hours.

The reaction mixture was sieved through a 0.1 mm mesh screen to separate only the granular polymer, which was washed with acetone. A portion of the wet polymer was washed with water and dried under a reduced pressure to obtain a polymer 1A.

Another portion of the wet polymer was immersed in an aqueous 2%-NH₄Cl solution and treated at 40°C for 30 minutes, washed with water and dried under a reduced pressure to obtain a polymer 1B.

### Synthetic Experimental Example 2:

Into a titanium-lined autoclave, 372 kg of hydrous sodium sulfide (solid content, 46.16%) and 826.5 kg of NMP were charged and the temperature was increased to about 203°C to distill out 144 kg of water. Then, 4 kg of water and 250.5 kg of NMP were supplied additionally (total water/NMP = 3.0 mol/kg). Then, 319.5 kg of p-dichlorobenzene was charged (total arylene group/NMP = 2.02 mol/kg).

After reacting at 210°C for 10 hours, 136 kg of water was supplied additionally (total water/NMP= 10.0 mol/kg). Then, they were polymerized at 260°C for 2 hours.

The reaction mixture was sieved through a 0.1 mm mesh screen to separate only the granular polymer, which was washed with acetone.

A portion of the wet polymer was washed with water and dried under a reduced pressure to obtain a polymer 2A.

Another portion of the wet polymer was immersed in an aqueous 2%-NH₄Cl solution and treated at 40°C for 30 minutes, washed with water and dried under a reduced pressure to obtain a polymer 2B.

### Synthetic Experimental Example 3:

Into a titanium-lined autoclave, 372 kg of hydrous sodium sulfide (solid content, 46.16%) and 827 kg of NMP were charged and the temperature was increased to about 203°C to distill out 145 kg of water. Then, 3 kg of water and 250 kg of NMP were supplied additionally (total water/NMP = 3.0 mol/kg). Then, 318 kg of p-dichlorobenzene was charged (total arylene group/NMP = 2.01 mol/kg).

After reacting at 210°C for 10 hours, 136 kg of water was supplied additionally (total water/NMP = 10.0 mol/kg). Then, they were polymerized at 260°C for 2 hours.

The reaction mixture was sieved through a 0.1 mm mesh screen to separate only the granular polymer, which was washed with acetone.

A portion of the wet polymer was washed with water and dried under a reduced pressure to obtain a polymer 3A.

### Synthetic Experimental Example 4:

Into a titanium-lined autoclave, 423 kg of hydrous sodium sulfide (solid content, 46.09%) and 930 kg of NMP were charged and the temperature was increased to about 203°C to distill out 170 kg of water. Then, 4 kg of water and 43 kg of NMP were supplied additionally (total water/MMP = 3.5 mol/kg). Then, 365 kg of p-dichlorobenzene was charged (total arylene group/NMP = 2.55 mol/kg). After reacting at 220°C for 5 hours, 136 kg of water as supplied additionally (total water/NMP = 11.3 mol/kg). Then, they were polymerized at 260°C for 4 hours.

The reaction mixture was sieved through a 0.1 mm mesh screen to separate only the granular polymer, which was washed with acetone.

A portion of the wet polymer was treated by being immersed in an aqueous 2%-NH₄Cl solution at 40°C for 30 minutes, washed with water and dried under a reduced pressure to obtain a polymer 4B.

Another portion of the wet polymer was immersed in an aqueous hydrochloric acid solution of pH = 1 and treated at 40°C for 30 minutes, washed with an aqueous diluted ammonia, washed with water and then dried under a reduced pressure to obtain a polymer 4C.

### Example 1:

Inherent viscosity ηᵢₙₕ was determined for each of the synthesized polymers from the solution viscosity in a 1-chloronaphthalene solution of PATE at 0.4 g/dl in concentration at 206°C.

The necessary time for 50% crystallization was determined by a conventional method using DSC (for example, as described in "High Polymer Chemistry" 25, 155 (1968)). The measuring conditions are as follows. About 5 mg of each sample was melted at 340°C for one minute and rapidly cooled to 250°C at a rate of 200°C/minute and kept at 250°C to obtain an isothermal crystallization curve. Based on the obtained isothermal crystallization curve, a time required for the crystallization of one-half of the entire crystallizable ingredient was determined.

As examples of commercially available conventional PATEs, "RYTON-P4®" and "RYTON-V1®" (made by Phillips Petroleum Co.) were used for comparison.

The results are collectively shown in Table 1.

**Table 1**

| Polymer Code | ηᵢₙₕ (dl/g) | Time for 50% Crystallization (second) | Remarks |
|---|---|---|---|
| 1A | 0.13 | 380 | Comparative Example |
| 1B | 0.13 | 25 | Example |
| 2A | 0.16 | 920 | Comparative Example |
| 2B | 0.16 | 30 | Example |
| 3A | 0.18 | 1340 | Comparative Example |
| 4B | 0.26 | 150 | Comparative Example |
| 4C | 0.26 | 110 | Comparative Example |
| P4 | 0.28 | 420 | Comparative Example |
| V1 | 0.15 | 1110 | Comparative Example |

### Example 2:

Pellets were prepared by uniformly blending 81 parts by weight of commercially available PATE, RYTON-P4®, and 19 parts by weight of the polymer 1B obtained in Synthetic Experimental Example 1 in a Henshel mixer, melt extruding the blend into a strand-like shape by a parallel twin-screw extruder and rapidly cooling and cutting the extrudate.

Necessary time for 50% crystallization in seconds was measured for the obtained pellets by the same method described in Example 1. The necessary time for 50% crystallization of the product in this Example was 230 seconds and it can be seen that the time is significantly reduced as compared with the time of 420 seconds for RYTON-P4® alone (refer to P4 in Table 1).

## Claims

1. A process for producing a polyarylene thioether, which process comprises treating a polyarylene thioether comprising not less than 60 mol % of a repeating unit of 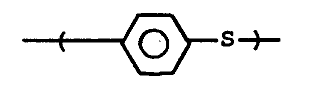 and having an inherent solution viscosity (measured with a 1-chloronaphthalene solution of 0.4 g of polymer/dl at 206°C) of not less than 0.05 and not more than 0.25 dl/g, at a temperature of 0 to 150°C and for a time of 5 to 500 minutes whereby curing is prevented, with a solution containing from 0.1 to 30% by weight of a salt composed of a non-oxidative strong acid with an ionization constant K of not less than 10⁻³ and a weak base with an ionization constant K of not more than 10⁻⁴, both measured in an aqueous solution at 25°C.

2. A process according to claim 1, wherein the polyarylene thioether is prepared by bringing an alkali metal sulfide and a halo aromatic compound comprising a p-dihalo benzene as the main ingredient into a dehalogenating-sulfurizing reaction in an aprotic organic solvent.

3. A process according to claim 1 or 2, wherein said non-oxidative strong acid is at least one of the acids selected from hydrochloric acid, dilute sulfuric acid, maleic acid, phosphoric acid, formic acid and halogenated acetic acid.

4. A process according to any one of claims 1 to 3, wherein said weak base is at least one of the bases selected from ammonia and pyridine.

5. A process according to any one of claims 1 to 4 further comprising formulating the polyarylene thioether produced with one or more compounds selected from fibrous fillers, inorganic powdery fillers, synthetic resins and elastomers, so as to obtain a polyarylene thioehter composition containing not less than 20% by weight of said polyarylene thioether.

6. A process according to claim 5, wherein said fibrous filler comprises glass fibers, carbonaceous fibers, silica fibers, alumina fibers, silicon carbide fibers, zirconia fibers, calcium titanate fibers, wollastonite, calcium sulfate fibers or aramide fibers or a mixture of two or more thereof.

7. A process according to claim 5 or 6, wherein said inorganic powdery filler comprises talc, mica, clay, kaolin, calcium carbonate, magnesium carbonate, calcium silicate, magnesium silicate, silica, alumina, titanium white, carbon black, calcium sulfate, iron oxide, zinc oxide or copper oxide or a mixture of two or more thereof.

8. A process according to any one of claims 5 to 7, wherein said synthetic resin comprises a polyolefin, polyester, polyamide, polyimide, polyether imide, polycarbonate, polyphenylene ether, polysulfone, polyether sulfone, polyether ether ketone, polyether ketone, polyarylene, polyacetal, polyvinylidene fluoride, polyethylene tetrafluoride, polystyrene, ABS resin, epoxy resin, urethane resin, silicone resin or phenol resin or a mixture of two or more thereof.

9. A process according to any one of claims 5 to 8, wherein said elastomer comprises a polyolefin rubber, fluorine rubber, silicone rubber, hydrogenated SBR, butyl rubber, polyester rubber or polyamide rubber or a mixture of two or more thereof.

10. A process according to any one of the preceding claims, which process further comprises melt processing the polyarylene thioether or polyarylene thioether composition, so as to produce a molded product.

11. A process according to any one of claims 1 to 4, which process further comprises mixing not less than 5 wt % of the resultant polyarylene thioether with a polyarylene thioether having a 50% crystallization time of 100 seconds or longer, so as to produce a polyarylene thioether composition.

## Patentansprüche

1. Verfahren zum Herstellen eines Polyarylenthioethers, welches das Behandeln eines Polyarylenthioethers, umfassend nicht weniger als 60 Mol.-% der folgenden Repetiereinheit 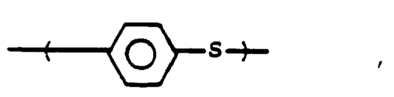 mit einer inherenten Lösungsviskosität (gemessen mit einer 1-Chlornaphthalinlösung von 0,4 g Polymer/dl bei 206°C) von nicht weniger als 0,05 und nicht mehr als 0,25 dl/g, bei einer Temperatur von 0 bis 150°C für eine Dauer von 5 is 500 Min., wodurch ein Aushärten verhindert wird, mit einer Lösung, enthaltend 0,1 bis 30 Gew.-% eines Salzes, zusammengesetzt aus einer nicht-oxidativen starken Säure mit einer Dissoziationskonstante K von nicht weniger als 10⁻³ und aus einer schwachen Base mit einer Dissoziationskonstante K von nicht mehr als 10⁻⁴, beide in einer wäßrigen Lösung bei 25°C gemessen, umfaßt.

2. Verfahren nach Anspruch 1, wobei der Polyarylenthioether durch eine Dehalogenierungs-Schwefelungsreaktion eines Alkalimetallsulfids und einer Halogen-aromatischen Verbindung, umfassend ein p-Dihalogenbenzol als Hauptbestandteil, in einem aprotischen, organischen Lösungsmittel hergestellt wird.

3. Verfahren nach Anspruch 1 oder 2, wobei die nicht-oxidative starke Säure mindestens eine der Säuren, ausgewählt aus Salzsäure, verdünnter Schwefelsäure, Maleinsäure, Phosphorsäure, Ameisensäure und halogenierter Essigsäure, ist.

4. Verfahren nach einem der Ansprüche 1 bis 3, wobei die schwache Base mindestens eine der Basen, ausgewählt aus Ammoniak und Pyrridin, ist.

5. Verfahren nach einem der Ansprüche 1 bis 4, welches weiterhin das Formulieren des hergestellten Polyarylenthioethers mit einer oder mehreren Verbindungen, ausgewählt aus faserigen Füllstoffen, anorganischen, pulverigen Füllstoffen, synthetischen Harzen und Elastomeren, umfaßt, um eine Polyarylenthioetherzusammensetzung, enthaltend nicht weniger als 20 Gew.-% des Polyarylenthioethers, zu erhalten.

6. Verfahren nach Anspruch 5, wobei der faserige Füllstoff Glasfasern, kohlenstoffhaltige Fasern, Siliciumdioxidfasern, Aluminiumoxidfasern, Siliciumcarbidfasern, Zirkoniumoxidfasern, Calciumtitanatfasern, Wollastonit, Calciumsulfatfasern oder Aramidfasern oder ein Gemisch aus zwei oder mehreren davon umfaßt.

7. Verfahren nach Anspruch 5 oder 6, wobei der anorganische pulverige Füllstoff Talk, Glimmer, Ton, Kaolin, Calciumcarbonat, Magnesiumcarbonat, Calciumsilikat, Magnesiumsilikat, Siliciumdioxid, Aluminiumoxid, Titanweiß, Rußschwarz, Calciumsulfat, Eisenoxid, Zinkoxid oder Kupferoxid oder ein Gemisch aus zwei oder mehreren davon umfaßt.

8. Verfahren nach einem der Ansprüche 5 bis 7, wobei das synthetische Harz ein Polyolefin, Polyester, Polyamid, Polyimid, Polyetherimid, Polycarbonat, Polyphenylenether, Polysulfon, Polyethersulfon, Polyetheretherketon, Polyetherketon, Polyarylen, Polyacetal, Polyvinylidenfluorid, Polyethylentetrafluorid, Polystyrol, ABS-Harz, Epoxyharz, Urethanharz, Silikonharz oder Phenolharz oder ein Gemisch aus zwei oder mehreren davon umfaßt.

9. Verfahren nach einem der Ansprüche 5 bis 8, wobei das Elastomer einen Polyolefinkautschuk, Fluorkautschuk, Silikonkautschuk, hydrierten Styrolbutadien-Kautschuk, Butylkautschuk, Polyesterkautschuk oder Polyamidkautschuk oder ein Gemisch aus zwei oder mehreren davon umfaßt.

10. Verfahren nach einem der vorhergehenden Ansprüche, welches weiterhin das Schmelzverarbeiten des Polyarylenthioethers oder der Polyarylenthioetherzusammensetzung umfaßt, um ein geformtes Produkt herzustellen.

11. Verfahren nach einem der Ansprüche 1 bis 4, welches weiterhin das Mischen von nicht weniger als 5 Gew.-% des erhaltenen Polyarylenthioethers mit einem Polyarylenthioether mit einer 50 %-igen Kristallisationszeit von 100 s oder mehr umfaßt, um eine Polyarylenthioetherzusammensetzung herzustellen.

## Revendications

1. Procédé pour la production d'un poly(thioéther d'arylène), qui comprend le traitement d'un poly(thioéther d'arylène) ne comprenant pas moins de 60% en moles d'une unité répétée de 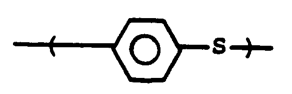 et ayant une viscosité inhérente en solution (mesurée avec une solution dans le 1-chloronaphtalène de 0,4 g de polymère/dl à 206°C) d'au moins 0,05 et ne dépassant pas 0,25 dl/g, à une température de 0 à 150°C et pendant un temps de 5 à 500 minutes de façon à empêcher un durcissement, avec une solution contenant de 0,1 à 30% en poids d'un sel formé à partir d'un acide fort non oxydant ayant une constante d'ionisation K d'au moins 10⁻³ et une base faible avec une constante d'ionisation K de dépassant pas 10⁻⁴, toutes deux mesurées dans une solution aqueuse à 25°C.

2. Procédé suivant la revendication 1, dans lequel le poly(thioéther d'arylène) est préparé par soumission d'un sulfure de métal alcalin et d'un composé haloaromatique comprenant un p-dihalo-benzène comme composant principal, à une réaction de déshalogénation-sulfuration dans un solvant organique aprotique.

3. Procédé suivant l'une des revendications 1 ou 2, dans lequel cet acide fort non oxydant est au moins l'un des acides choisis parmi l'acide chlorhydrique,l'acide sulfurique dilué, l'acide maléique, l'acide phosphorique, l'acide formique et l'acide acétique halogéné.

4. Procédé suivant l'une quelconque des revendications 1 à 3, dans lequel cette base faible est au moins l'une des bases choisies parmi l'ammoniac et la pyridine.

5. Procédé suivant l'une quelconque des revendications 1 à 4, comprenant de plus la formulation du poly(thioéther d'arylène) produit avec un ou plusieurs composés choisis parmi des charges fibreuses, des charges pulvérvlentes inorganiques, des résines et des élastomères de synthèse, de façon à obtenir une composition de poly(thioéther d'arylène) ne contenant pas moins de 20% en poids de ce poly(thioéther d'arylène).

6. Procédé suivant la revendication 5, dans lequel cette charge fibreuse comprend des fibres de verre, des fibres carbonées, des fibres de silice, des fibres d'alumine, des fibres de carbure de silicium, des fibres d'oxyde de zirconium, des fibres de titanate de calcium, de la wollastonite, des fibres de sulfate de calcium ou des fibres d'aramide ou un mélange de deux ou plusieurs de celles-ci.

7. Procédé suivant l'une des revendications 5 ou 6, dans lequel cette charge pulvérulente inorganique comprend le talc, le mica, l'argile, le kaolin, le carbonate de calcium, le carbonate de magnésium, le silicate de calcium, le silicate de magnésium, la silice, l'alumine, le blanc de titane, le noir de carbone, le sulfate de calcium, l'oxyde de fer, l'oxyde de zinc ou l'oxyde de cuivre ou un mélange de deux ou plusieurs de ceux-ci.

8. Procédé suivant l'une quelconque des revendications 5 à 7, dans lequel cette résine synthétique comprend une polyoléfine, un polyester, un polyamide, un polyimide, un polyéther imide, un polycarbonate, un poly(éther de phénylène), une polysulfone, une polyéther sulfone, une polyéther éther cétone, une polyéther cétone, un polyarylène, un polyacétal, un poly(fluorure de vinylidène), un poly(tétrafluorure d'éthylène), un polystyrène, une résine ABS, une résine époxy, une résine uréthane, une résine silicone ou une résine phénolique ou un mélange de deux ou plusieurs de ceux-ci.

9. Procédé suivant l'une quelconque des revendications 5 à 8, dans lequel cet élastomère comprend un caoutchouc de polyoléfine, un caoutchouc au fluor, un caoutchouc silicone, un SBR hydrogéné, un caoutchouc butyle, un caoutchouc polyester ou un caoutchouc polyamide ou un mélange de deux ou plusieurs de ceux-ci.

10. Procédé suivant l'une quelconque des revendications précédentes, qui comprend de plus le traitement à l'état fondu du poly(thioéther d'arylène) ou de la composition de poly(thioéther d'arylène), pour produire un produit moulé.

11. Procédé suivant l'une quelconque des revendications 1 à 4, qui comprend de plus le mélange d'au moins 5% en poids du poly(thioéther d'arylène) résultant avec un poly(thioéther d'arylène) ayant un temps de cristallisation de 100 secondes ou plus, de façon à produire une composition de poly(thioéther d'arylène).
